# EUROPÄISCHE PATENTSCHRIFT

(11) **EP 1 523 674 B1**
(45) Veröffentlichungstag und Bekanntmachung des Hinweises auf die Patenterteilung: **01.03.2006**
(21) Anmeldenummer: 03766136.0
(22) Anmeldetag: 08.07.2003
(51) Int. Cl.: G01N 27/327, C23C 8/02, C23C 8/16, G01N 33/483, G01N 33/487

(54) **VERFAHREN ZUR HERSTELLUNG EINES MIT EINER SCHICHTELEKTRODE VERSEHENEN HYDROPHILEN SUBSTRATS**
METHOD FOR THE PRODUCTION OF A HYDROPHILIC SUBSTRATE PROVIDED WITH A LAYER ELECTRODE
PROCEDE DE PRODUCTION D'UN SUBSTRAT HYDROPHILE POURVU D'UNE ELECTRODE EN COUCHE

(30) Priorität: 26.07.2002 DE 10234114
(43) Veröffentlichungstag der Anmeldung: 20.04.2005
(73) Patentinhaber: Roche Diagnostics GmbH, 68305 Mannheim (DE); F.HOFFMANN-LA ROCHE AG, 4070 Basel (CH)
(72) Erfinder: HORN, Carina, 64665 Alsbach-Haehnlein (DE); UNKRIG, Volker, 68526 Ladenburg (DE); NORTMEYER, Christine, 68305 Mannheim (DE)
(74) Vertreter: Pfiz, Thomas
(86) Internationale Anmeldenummer: PCT/EP2003/007331
(87) Internationale Veröffentlichungsnummer: WO 2004/013366

(56) Entgegenhaltungen:
- EP-A- 1 156 325
- WO-A-99/29435
- DE-A- 19 753 847
- DE-A- 19 753 849
- US-A- 5 200 051

## Beschreibung

Die Erfindung betrifft ein Verfahren zur Herstellung eines mit einer Schichtelektrode versehenen isolierenden, Substrats, insbesondere für einen analytischen Teststreifen sowie ein entsprechendes Erzeugnis.

Strukturierte Elektroden dieser Art können in mikrofluidischen Teststreifen für elektrochemische Messungen genutzt werden, wobei durch eine auf dem Träger bzw. Substrat angeordnete Kapillarkanalstruktur eine räumliche Trennung von Probenaufgabestelle und Detektionszone unter Verwendung minimaler Probenvolumina möglich ist. Als Trägermaterial zur kostengünstigen Massenfertigung derartiger Analyseeinheiten werden häufig Polymerfolien verwendet, welche die Probenflüssigkeit nicht absorbieren und aufgrund ihres hohen hydrophoben Charakters die Beschichtung mit einem Elektrodenmaterial wie Gold erleichtern, jedoch nur eine geringe Benetzbarkeit für die in der Regel wässrigen Probenflüssigkeiten wie Blut besitzen. Die Probenflüssigkeiten fließen daher nur sehr langsam und inhomogen über dieses Material, und die Aufnahme des Analyten in das Teststreifensystem wird für den Benutzer unzumutbar lang. Um dem abzuhelfen, wurden bereits Anordnungen mit übereinander geklebten Folienlagen eingesetzt, beispielsweise indem eine dünne Maskenfolie mit hydrophiler Oberfläche auf Teile einer leitenden unstrukturierten Elektrodenschicht aufgeklebt wird. Dafür werden jedoch mehrere komplizierte Produktionsschritte benötigt, und es entstehen bei einer solchen Anordnung Stufen auf dem Teststreifen, die eine einfließende Flüssigkeit überwinden muss. Dies kann zum Abstoppen der Probenflüssigkeit führen, so dass der Analyt unter Umständen nicht oder nur fehlerbehaftet zu dem eigentlichen Messfeld gelangt.

Aus der WO 99/29435 ist es an sich bekannt, zur Erhöhung der Oberflächenspannung von Gegenständen eine Oberflächenschicht durch Einwirkung von Wasser zu hydrophilieren, d.h. die Wasseraffinität zu erhöhen. Speziell wird bei dieser Behandlung eine auf dem Gegenstand abgeschiedene metallische Schicht ihre natürliche Oxidschicht hinaus so weit oxidiert, dass sie ihr metallisches Erscheinungsbild verliert und unter Umständen völlig transparent wird. Die Offenbarung der WO99/29435 hinsichtlich dieser Art der chemischen Hydrophilierung wird durch Bezugnahme in die vorliegende Anmeldung eingeführt.

Die Erhöhung der Oberflächenspannung bei dieser Behandlung resultiert aus einer Seigerung der Polarität und entspricht einer gesteigerten Hydrophilie der betrachteten Oberflächen. Die Hydrophilie ist die Wasseraffnität einer Oberfläche. Hydrophile Oberflächen sind in diesem Zusammenhang wasseranziehende Flächen. Wässrige Proben, darunter auch biologische Proben wie Blut, Urin, Speichel, Schweiß, und daraus abgeleitete Proben wie Plasma und Serum, spreiten auf solchen Oberflächen gut. Solche Flächen sind unter anderem dadurch charakterisiert, dass an der Grenzfläche ein Wassertropfen auf ihnen einen spitzen Rand- oder Kontaktwinkel ausbildet. Im Gegensatz dazu wird auf hydrophoben, d.h. wasserabweisenden Oberflächen, an der Grenzfläche zwischen Wassertropfen und Oberfläche ein stumpfer Randwinkel ausgebildet.

Der Randwinkel als Resultat der Oberflächenspannung der Prüfflüssigkeit und der zu untersuchenden Oberfläche ist als Maß für die Hydrophilie einer Oberfläche geeignet. Wasser hat beispielsweise eine Oberflächenspannung von 72 mN/m. Liegt der Wert der Oberflächenspannung der betrachteten Fläche weit, d. h. mehr als 20 mN/m unter diesem Wert, so ist die Benetzung schlecht und der resultierende Randwinkel ist stumpf. Eine solche Fläche wird als hydrophob bezeichnet. Nähert sich die Oberflächenspannung dem Wert, der für Wasser gefunden wird, so ist die Benetzung gut und der Randwinkel wird spitz. Wird die Oberflächenspannung dagegen gleich oder größer dem für Wasser gefundenen Wert, so zerläuft der Tropfen und es findet Totalspreitung der Flüssigkeit statt. Ein Randwinkel ist dann nicht mehr zu messen. Flächen, die mit Wassertropfen einen spitzen Randwinkel bilden oder bei denen Totalspreitung eines Wassertropfens beobachtet wird, werden als hydrophil bezeichnet.

Ausgehend hiervon liegt der Erfindung die Aufgabe zugrunde, ein Verfahren zur Herstellung eines mit einer Schichtelektrode versehenen Substrats sowie ein derartiges Erzeugnis bereitzustellen, bei dem die bekannten Nachteile zumindest verringert oder sogar vermieden werden und insbesondere eine Elektrodenanordnung auf einem als Transportstrecke für polare Flüssigkeiten optimierten Träger in einem einfachen Fertigungsverfahren zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Dementsprechend ist in verfahrensmäßiger Hinsicht folgende Kombination von Verfahrensschritten vorgesehen:
a) die Schichtelektrode wird als strukturiertes Flächenmuster auf dem Substrat gebildet,
b) das Substrat wird nach dem Aufbringen der Schichtelektrode mit einer Deckschicht versehen,
c) die Wasseraffinität der Deckschicht und damit die Funktionstauglichkeit der kapillaren Transportstrecken wird durch eine chemische Oberflächenbehandlung erhöht.

Eine Variante umfasst die folgenden Verfahrensschritte:
a) das Substrat wird mit einem Ausgangsmaterial einer Deckschicht beschichtet,
b) die Schichtelektrode wird als strukturiertes Flächenmuster auf der Deckschicht gebildet,
c) die Wasseraffinität der Deckschicht und damit die Funktionstauglichkeit der kapillaren Transportstrecken wird vor oder nach dem Aufbringen der Schichtelektrode durch eine chemische Oberflächenbehandlung erhöht.

Damit ist es möglich, in einem für die Massenfertigung geeigneten Prozessablauf mit wenigen Schritten eine optimierte Oberfläche zu schaffen, bei der die leitende und die hydrophile Schicht mit geringer Schichtdicke unter Vermeidung von Stufen aneinander angrenzen.

Vorteilhafterweise wird das Substrat mit Aluminium als Ausgangsmaterial bedampft. Dadurch kann auch ein hydrophobes Substratmaterial auf einfache Weise mit einer hydrophilen Oberfläche versehen werden, ohne die Herstellung einer definierten Elektrodenstruktur zu beeinträchtigen.

Eine weitere bevorzugte Ausführung sieht vor, dass das Substrat ganzflächig mit der Deckschicht versehen wird. Überraschend hat sich gezeigt, dass bei geeigneter Deckschichtdicke die Funktionalität der Elektrode erhalten bleibt, wobei die Herstellung der Elektrodenstruktur auf dem noch unbeschichteten Substrat beträchtlich erleichtert wird.

Weiter ist es von Vorteil, wenn das unbeschichtete oder bereits mit der Deckschicht versehene Substrat durch einen Dünnschichtdepositionsprozess, insbesondere durch Aufdampfen oder Aufsputtem mit einer Elektrodenschicht zur Ausbildung der Schichtelektrode belegt wird. Eine geometrische Struktur lässt sich vorteilhaft dadurch erzeugen, dass die Schichtelektrode durch bereichsweises selektives Abtragen, vorzugsweise durch Laserablation einer zuvor gebildeten Elektrodenschicht gebildet wird.

Alternativ ist es denkbar, dass die Schichtelektrode mittels einer bereichsweise freigesparten Maske bzw. Schablone bereits beim Aufbringen strukturiert wird. Dies lässt sich auch dadurch erreichen, dass die Schichtelektrode durch ein Druckverfahren aufgebracht wird.

Vorteilhafterweise besitzt die Schichtelektrode eine Schichtdicke kleiner 10 Mikrometer, vorzugsweise kleiner 100 Nanometer. Günstig ist es auch, wenn die Schichtelektrode aus einem metallischen Elektrodenmaterial, vorzugsweise aus Gold, Platin, Palladium oder Iridium besteht. Grundsätzlich lassen sich aber auch andere leitende Materialien wie Graphit als Elektrodenmaterial einsetzen.

In bevorzugter Ausführung besteht das Substrat aus einem hydrophoben Isolatormaterial, insbesondere einer Polymerfolie.

Eine weitere vorteilhafte Ausführung sieht vor, dass die Deckschicht zunächst hydrophob ist und durch die Oberflächenbehandlung vorzugsweise unter Bildung einer anorganischen Oxidschicht hydrophil wird. Produktionstechnisch besonders einfach lässt sich dies dadurch erreichen, dass die Oberflächenbehandlung der Deckschicht durch Einwirkung von Wasser erfolgt, wobei die Deckschicht aus einem mit Wasser oxidierbaren anorganischen Ausgangsmaterial besteht und durch Beaufschlagung mit heißem Wasser oder Wasserdampf hydrophiliert wird.

Eine geeignete chemische Oberflächenmodifikation ist auch dadurch möglich, dass die Deckschicht durch Hydrolyse eines Phosphorsäureesters hydrophiliert wird.

Vorteilhafterweise sollte die Deckschicht mit einer Schichtdicke von weniger als 100 Mikrometer, vorzugsweise weniger als 50 Mikrometer ausgebildet werden.

Ein weiterer Erfindungsaspekt besteht in einem Erzeugnis bestehend aus einem mit einer Schichtelektrode versehenen isolierenden Substrat insbesondere für einen analytischen Teststreifen, wobei auf dem Substrat eine Kapillarkanalstruktur für den Transport einer wässrigen Bioflüssigkeit in den Elektrodenbereich zur Durchführung elektrochemischer Analysen vorgesehen ist, und wobei die Schichtelektrode eine elektrisch leitende Flächenstruktur aufweist und unter oder auf einer hydrophil ausgebildeten Deckschicht angeordnet ist, wobei die erhöhte Wasseraffinität der Deckschicht die Funktionstauglichkeit der kapillaren Transportstrecken verbessert..

Im Folgenden wird die Erfindung anhand eines in der Zeichnung in schematischer Weise dargestellten Ausführungsbeispiels näher erläutert. Es zeigen
- Fig. 1: ein mit einer strukturierten Schichtelektrode versehenes Substrat in schaubildlicher Darstellung; und
- Fig. 2: den Prozessablauf zur Herstellung einer Anordnung nach Fig. 1 in einem Blockdiagramm.

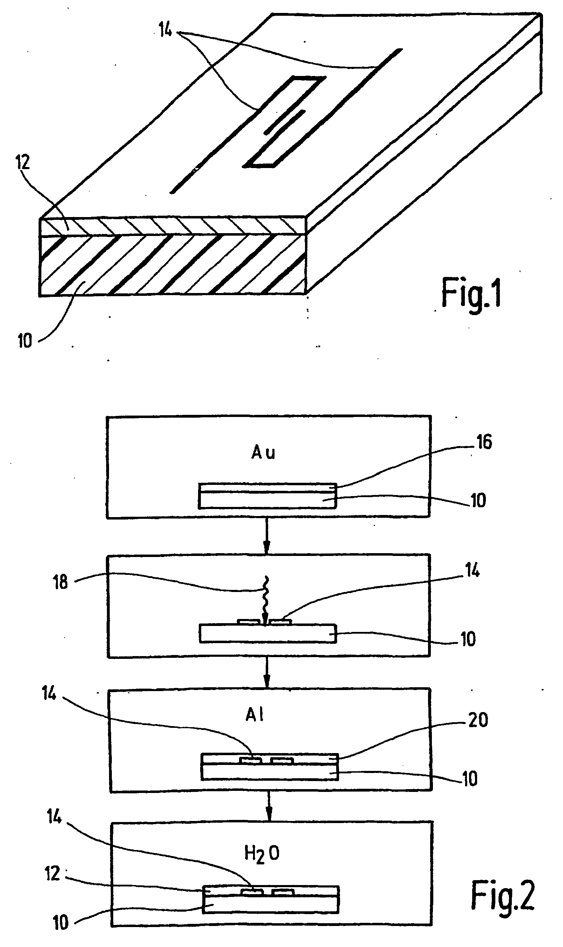

Die in Fig. 1 dargestellte Anordnung besteht im wesentlichen aus einem elektrisch isolierenden Substrat 10, einer auf das Substrat 10 aufgebrachten hydrophilen Deckschicht 12 und einer auf oder unter der Deckschicht 12 angeordneten strukturierten Schichtelektrode 14. Eine solche Anordnung lässt sich bevorzugt für den Aufbau von analytischen Teststreifen verwenden, welche auf einer Trägerfolie (Substrat) eine Kapillarkanalstruktur für den Transport einer wässrigen Bioflüssigkeit in den Elektrodenbereich zur Durchführung elektrochemischer Analysen aufweist.

Für eine kostengünstige Herstellung derartiger Einmal-Teststreifen lassen sich Trägermaterialien bzw. Substrate 10 auf Kunststoffbasis, insbesondere Polymerfolien einsetzen. Die Funktionstauglichkeit der nicht gezeigten kapillaren Transportstrecken lässt sich durch eine hydrophile Deckschicht 12 sicherstellen, wobei durch die Elektrodenstruktur 14 eine definierte Detektionszone geschaffen wird.

Fig. 2 veranschaulicht den Verfahrensablauf für die Herstellung solche Elektrodenträger. Zunächst wird eine Polyesterfolie 10 als Substrat durch Aufdampfen oder Aufsputtem von Gold einseitig vollflächig mit einer ca. 50 nm dicken Goldschicht 16 belegt. Sodann wird die beschichtete Folie als Target mit einem Laserstrahl 18 beschossen, um bestimmte Bereiche der Goldschicht 16 abzutragen bzw. zu verdampfen. Die Laserablation erlaubt die Freilegung eines mikrostrukturierten Flächenmusters, wobei durch gezielten Energietransfer ein schichtselektives Abtragen der Goldschicht möglich ist.

Im nächsten Verfahrensschritt wird auf das Substrat 10 und die darauf erzeugte Elektrodenstruktur 14 eine Aluminiumschicht 20 mit einer Schichtdicke von ca. 50 nm bzw. 100 nm aufgedampft. Anschließend wird die Hydrophilie dieser Schicht durch eine chemische Behandlung bzw. Modifikation erhöht. Zu diesem Zweck wird die Aluminiumschicht 20 durch Kochen im Wasserbad oder Beaufschlagen mit Wasserdampf oxidiert, wobei die so gebildete hydrophile Aluminiumoxid/hydroxid-Schicht bzw. Deckschicht 12 eine dauerhaft hohe Oberflächenspannung und Polarität besitzt, um ein gutes Fließverhalten einer polaren Flüssigprobe zu erreichen. Dabei hat sich herausgestellt, dass aufgrund der geringen Schichtdicke und Porosität der Oxidschicht 12 die Funktionsfähigkeit der Elektrodenstruktur 14 nicht wesentlich beeinträchtigt wird.

Grundsätzlich ist die Reihenfolge der zuvor beschriebenen Prozesse - abhängig von den verwendeten Materialien - variierbar. So kann das Substrat 10 zunächst mit Aluminium beschichtet und die Elektrodenstruktur 14 auf der Aluminiumschicht erzeugt werden. Dabei ist es möglich, die Aluminiumschicht vor oder nach dem Aufbringen der Elektrodenstruktur in eine hydrophile Deckschicht umzuwandeln, wobei grundsätzlich auch physikalische Methoden zur Hydrophilierung wie Plasmabehandlung denkbar sind.

## Patentansprüche

1. Verfahren zur Herstellung eines mit einer Schichtelektrode versehenen isolierenden Substrats, auf welchem eine Kapillarkanalstruktur für den Transport einer wässrigen Bioflüssigkeit in den Elektrodenbereich zur Durchführung elektrochemischer Analysen vorgesehen ist, umfassend die folgenden Verfahrensschritte:
a) die Schichtelektrode (14) wird als strukturiertes Flächenmuster auf dem Substrat (10) gebildet,
b) das Substrat (10) wird nach dem Aufbringen der Schichtelektrode (14) mit einer Deckschicht (12) versehen,
c) die Wasseraffinität der Deckschicht (12) und damit die Funktionstauglichkeit der kapillaren Transportstrecken wird durch eine chemische Oberflächenbehandlung erhöht.

2. Verfahren zur Herstellung eines mit einer Schichtelektrode versehenen isolierenden Substrats, auf welchem eine Kapillarkanalstruktur für den Transport einer wässrigen Bioflüssigkeit in den Elektrodenbereich zur Durchführung elektrochemischer Analysen vorgesehen ist, umfassend die folgenden Verfahrensschritte:
a) das Substrat (10) wird mit einem Ausgangsmaterial (20) einer Deckschicht (12) beschichtet,
b) die Schichtelektrode (14) wird als strukturiertes Flächenmuster auf der Deckschicht (12) gebildet,
c) die Wasseraffinität der Deckschicht (12) und damit die Funktionstauglichkeit der kapillaren Transportstrecken wird vor oder nach dem Aufbringen der Schichtelektrode (14) durch eine chemische Oberflächenbehandlung erhöht.

3. Verfahren nach Anspruch 1 oder 2, **dadurch gekennzeichnet, dass** das Substrat (10) mit Aluminium als Ausgangsmaterial der Deckschicht (12) bedampft wird.

4. Verfahren nach einem der Ansprüche 1 bis 3, **dadurch gekennzeichnet, dass** das Substrat (10) ganzflächig mit der Deckschicht (12) versehen wird.

5. Verfahren nach einem der Ansprüche 1 bis 4, **dadurch gekennzeichnet, dass** das gegebenenfalls bereits mit der Deckschicht (12) versehene Substrat (10) durch einen Dünnschichtdepositionsprozess mit einer Elektrodenschicht (16) zur Ausbildung der Schichtelektrode (14) belegt wird.

6. Verfahren nach einem der Ansprüche 1 bis 5, **dadurch gekennzeichnet, dass** die Schichtelektrode (14) durch bereichsweises selektives Abtragen einer zuvor gebildeten Elektrodenschicht (16) geometrisch strukturiert wird.

7. Verfahren nach Anspruch 6, **dadurch gekennzeichnet, dass** die Elektrodenschicht (16) vor dem Strukturieren der Schichtelektrode (14) ganzflächig mit einem Reagenzfilm versehen wird.

8. Verfahren nach einem der Ansprüche 1 bis 5, **dadurch gekennzeichnet, dass** die Schichtelektrode (14) mittels einer Maske beim Aufbringen strukturiert wird.

9. Verfahren nach einem der Ansprüche 1 bis 5, **dadurch gekennzeichnet, dass** die Schichtelektrode (14) durch ein Druckverfahren strukturiert aufgebracht wird.

10. Verfahren nach einem der Ansprüche 1 bis 9, **dadurch gekennzeichnet, dass** die Schichtelektrode (14) eine Schichtdicke kleiner 10 Mikrometer hat.

11. Verfahren nach einem der Ansprüche 1 bis 10, **dadurch gekennzeichnet, dass** die Schichtelektrode (14) aus einem metallischen Elektrodenmaterial besteht.

12. Verfahren nach einem der Ansprüche 1 bis 11, **dadurch gekennzeichnet, dass** das Substrat (10) aus einem hydrophoben Isolatormaterial besteht.

13. Verfahren nach einem der Ansprüche 1 bis 12, **dadurch gekennzeichnet, dass** die Deckschicht (12) zunächst hydrophob ist und durch die Oberflächenbehandlung hydrophil wird.

14. Verfahren nach einem der Ansprüche 1 bis 13, **dadurch gekennzeichnet, dass** die Oberflächenbehandlung der Deckschicht (12) durch Einwirkung von Wasser erfolgt.

15. Verfahren nach einem der Ansprüche 1 bis 14, **dadurch gekennzeichnet, dass** die Deckschicht (12) aus einem mit Wasser oxidierbaren anorganischen Ausgangsmaterial (20) besteht und durch Beaufschlagung mit heißem Wasser oder Wasserdampf hydrophiliert wird.

16. Verfahren nach einem der Ansprüche 1 bis 14, **dadurch gekennzeichnet, dass** die Deckschicht (12) durch Hydrolyse eines Phosphorsäureesters hydrophil ausgestattet wird.

17. Verfahren nach einem der Ansprüche 1 bis 16, **dadurch gekennzeichnet, dass** die Deckschicht (12) mit einer Schichtdicke von weniger als 100 Mikrometer ausgebildet wird.

18. Mit einer Schichtelektrode versehenes isolierendes Substrat (10), wobei auf dem Substrat (10) eine Kapillarkanalstruktur für den Transport einer wässrigen Bioflüssigkeit in den Elektrodenbereich zur Durchführung elektrochemischer Analysen vorgesehen ist, und wobei die Schichtelektrode (14) eine elektrisch leitende Flächenstruktur aufweist und unter oder auf einer hydrophil ausgebildeten Deckschicht (12) angeordnet ist, wobei die erhöhte Wasseraffinität der Deckschicht (12) die Funktionstauglichkeit der kapillaren Transportstrecken verbessert.

## Claims

1. Process for producing an insulating substrate provided with a layer electrode and a capillary channel structure for transporting an aqueous bioliquid into the electrode area in order to carry out electrochemical analyses, comprising the following process steps:
a) the layer electrode (14) is formed as a structured surface pattern on the substrate (10),
b) after applying the layer electrode (14), the substrate (10) is provided with a cover layer (12),
c) the water affinity of the cover layer (12) and therewith the functionality of the capillary transport paths is increased by a chemical surface treatment.

2. Process for producing an insulating substrate provided with a layer electrode and a capillary channel structure for transporting an aqueous bioliquid into the electrode area in order to carry out electrochemical analyses, comprising the following process steps:
a) the substrate (10) is coated with a starting material (20) of the cover layer (12),
b) the layer electrode (14) is formed as a structured surface pattern on the cover layer (12),
c) before or after applying the layer electrode (14), the water affinity of the cover layer (12) and therewith the functionality of the capillary transport paths is increased by a chemical surface treatment.

3. Process as claimed in claim 1 or 2, **characterized in that** the substrate (10) is vapour-deposited with aluminium as the starting material of the cover layer (12).

4. Process as claimed in one of the claims 1 to 3, **characterized in that** the substrate (10) is provided with the cover layer (12) over its entire surface.

5. Process as claimed in one of the claims 1 to 4, **characterized in that** the substrate (10) already optionally provided with the cover layer (12) is covered with an electrode layer (16) to form the layer electrode (14) by a thin layer deposition process.

6. Process as claimed in one of the claims 1 to 5, **characterized in that** the layer electrode (14) is geometrically structured by selectively ablating certain areas of a previously formed electrode layer (16).

7. Process as claimed in claim 6, **characterized in that** the entire area of the electrode layer (16) is provided with a reagent film before structuring the layer electrode (14).

8. Process as claimed in one of the claims 1 to 5, **characterized in that** the layer electrode (14) is structured when it is applied using a mask.

9. Process as claimed in one of the claims 1 to 5, **characterized in that** the layer electrode (14) is applied in a structured manner by a printing process.

10. Process as claimed in one of the claims 1 to 9, **characterized in that** the layer electrode (14) has a layer thickness of less than 10 micrometers.

11. Process as claimed in one of the claims 1 to 10, **characterized in that** the layer electrode (14) is composed of a metallic electrode material.

12. Process as claimed in one of the claims 1 to 11, **characterized in that** the substrate (10) is composed of a hydrophobic insulating material.

13. Process as claimed in one of the claims 1 to 12, **characterized in that** the cover layer (12) is firstly hydrophobic and is hydrophilized by surface treatment.

14. Process as claimed in one of the claims 1 to 13, **characterized in that** the surface treatment of the cover layer (12) preferably takes place by the action of water.

15. Process as claimed in one of the claims 1 to 14, **characterized in that** the cover layer (12) is composed of an inorganic starting material (20) that can be oxidized by water and is hydrophilized by treatment with hot water or water vapour.

16. Process as claimed in one of the claims 1 to 14, **characterized in that** the cover layer (12) is hydrophilized by hydrolysing a phosphoric acid ester.

17. Process as claimed in one of the claims 1 to 16, **characterized in that** the cover layer (12) is formed with a layer thickness of less than 100 micrometers.

18. An insulating substrate (10) provided with a layer electrode, the substrate (10) having a capillary channel structure for transporting an aqueous bioliquid into the electrode area in order to carry out electrochemical analyses, and the layer electrode (14) having an electrically conductive surface structure and being arranged under or on a hydrophilic cover layer (12), wherein the increased water affinity of the cover layer (12) improves the functionality of the capillary transport paths.

## Revendications

1. Procédé de fabrication d'un substrat isolant pourvu d'une électrode en couche, sur lequel est prévue une structure à canaux capillaires pour le transport d'un liquide biologique aqueux vers la zone de l'électrode pour la réalisation d'analyses électrochimiques, comportant les étapes suivantes :
a) l'électrode en couche (14) est formée en tant que forme structurée sur le substrat (10),
b) le substrat (10) est pourvu d'une couche de recouvrement (12) après la mise en place de l'électrode en couche (14),
c) l'affinité de la couche de recouvrement (12) avec l'eau et donc l'aptitude fonctionnelle des voies de transport capillaires est augmentée par un traitement de surface chimique.

2. Procédé de fabrication d'un substrat isolant pourvu d'une électrode en couche sur lequel est prévue une structure à canaux capillaires pour le transport d'un liquide biologique aqueux vers la zone de l'électrode pour la réalisation d'analyses électrochimiques, comprenant les étapes suivantes :
a) le substrat (10) est recouvert d'un matériau de départ (20) d'une couche de recouvrement (12),
b) l'électrode en couche (14) est formée en tant que forme structurée sur la couche de recouvrement (12),
c) l'affinité de la couche de recouvrement (12) avec l'eau et donc l'aptitude fonctionnelle des voies de transport capillaires sont augmentées par un traitement de surface chimique avant ou après la mise en place de l'électrode en couche (14).

3. Procédé selon la revendication 1 ou 2, **caractérisé en ce que** le substrat (10) est métallisé à l'aluminium en tant que matériau de départ de la couche de recouvrement (12).

4. Procédé selon l'une quelconque des revendications 1 à 3, **caractérisé en ce que** le substrat (10) est pourvu de la couche de recouvrement (12) sur toute la surface.

5. Procédé selon l'une quelconque des revendications 1 à 4, **caractérisé en ce que** le substrat (10), déjà pourvu de la couche de recouvrement (12), est recouvert, par un processus de déposition en couche mince, d'une couche d'électrode (16) pour constituer l'électrode en couche (14).

6. Procédé selon l'une quelconque des revendications 1 à 5, **caractérisé en ce que** l'électrode en couche (14) est structurée géométriquement par l'enlèvement sélectif localisé d'une couche d'électrode (16) préalablement formée.

7. Procédé selon la revendication 6, **caractérisé en ce que** la couche d'électrode (16) est pourvue d'un film réactif sur toute la surface avant la structuration de l'électrode en couche (14).

8. Procédé selon l'une quelconque des revendications 1 à 5, **caractérisé en ce que** l'électrode en couche (14) est structurée au moyen d'un masque lors de la mise en place.

9. Procédé selon l'une quelconque des revendications 1 à 5, **caractérisé en ce que** l'électrode en couche (14) est appliquée structurée par un procédé d'impression.

10. Procédé selon l'une quelconque des revendications 1 à 9, **caractérisé en ce que** l'électrode en couche (14) a une épaisseur inférieure à 10 microns.

11. Procédé selon l'une quelconque des revendications 1 à 10, **caractérisé en ce que** l'électrode en couche (14) est constituée d'un matériau métallique pour électrodes.

12. Procédé selon l'une quelconque des revendications 1 à 11, **caractérisé en ce que** le substrat (10) est constitué d'un matériau isolant hydrophobe.

13. Procédé selon l'une quelconque des revendications 1 à 12, **caractérisé en ce que** la couche de recouvrement (12) est d'abord hydrophobe et devient hydrophile par le traitement de surface.

14. Procédé selon l'une quelconque des revendications 1 à 13, **caractérisé en ce que** le traitement de surface de la couche de recouvrement (12) est réalisé par l'action de l'eau.

15. Procédé selon l'une quelconque des revendications 1 à 14, **caractérisé en ce que** la couche de recouvrement (12) est constituée d'un matériau de départ (20) inorganique oxydable par l'eau et est rendue hydrophile par exposition à de l'eau chaude ou de la vapeur d'eau.

16. Procédé selon l'une quelconque des revendications 1 à 14, **caractérisé en ce que** la couche de recouvrement (12) est rendue hydrophile par hydrolyse d'un ester de l'acide phosphorique.

17. Procédé selon l'une quelconque des revendications 1 à 16, **caractérisé en ce que** la couche de recouvrement (12) a une épaisseur inférieure à 100 microns.

18. Substrat isolant (10) pourvu d'une électrode en couche, sur lequel est prévue une structure à canaux capillaires pour le transport d'un liquide biologique aqueux vers la zone de l'électrode pour la réalisation d'analyses électrochimiques et l'électrode en couche (14) présentant une structure électriquement conductrice et étant disposée sous ou sur une couche de recouvrement (12) hydrophile, l'affinité accrue de la couche de recouvrement (12) avec l'eau améliorant l'aptitude fonctionnelle des voies de transport capillaires.
